# EUROPÄISCHE PATENTSCHRIFT

(11) **EP 3 140 071 B1**
(45) Veröffentlichungstag und Bekanntmachung des Hinweises auf die Patenterteilung: **14.08.2019**
(21) Anmeldenummer: 16710912.3
(22) Anmeldetag: 26.01.2016
(51) Int. Cl.: B23K 9/28, B23K 11/30, B23K 37/00, B23K 26/70

(54) **VORRICHTUNG ZUR KÜHLMITTELVERSORGUNG, STEUERUNG FÜR EINE SOLCHE VORRICHTUNG UND VERFAHREN ZUM BETRIEB EINER SOLCHEN KÜHLMITTELVERSORGUNG**
COOLANT SUPPLY DEVICE, CONTROL SYSTEM FOR SUCH COOLANT SUPPLY DEVICE AND METHOD OF OPERATION OF SUCH A COOLANT SUPPLY DEVICE
DISPOSITIF D'ALIMENTATION DE LIQUIDE DE REFROIDISSEMENT, COMMANDE POUR UN TEL DISPOSITIF ET PROCÉDÉ D'EXPLOITATION D'UN TEL DISPOSITIF

(30) Priorität: 17.03.2015 DE 102015204812
(43) Veröffentlichungstag der Anmeldung: 15.03.2017
(73) Patentinhaber: Guenther, Christian, 74078 Heilbronn (DE)
(72) Erfinder: Guenther, Christian, 74078 Heilbronn (DE)
(74) Vertreter: Patent- und Rechtsanwälte Ullrich & Naumann
(86) Internationale Anmeldenummer: PCT/DE2016/200044
(87) Internationale Veröffentlichungsnummer: WO 2016/146114

(56) Entgegenhaltungen:
- WO-A1-2010/005368
- DE-U1-202007 011 304

## Beschreibung

Die Erfindung betrifft eine Vorrichtung zur Kühlmittelversorgung einer mit fluidem Kühlmittel zu versorgenden Bearbeitungseinrichtung. Bei dem Kühlmittel handelt es sich regelmäßig um Wasser. Lediglich beispielhaft sei auf eine Schweißeinrichtung oder einen Schweißroboter verwiesen, bei der bzw. bei dem die Schweißkappe zu kühlen ist. Ebenso kann es sich bei der Bearbeitungseinrichtung um eine Induktionseinrichtung mit gekühlter Induktionsspule handeln. Wesentlich ist, dass ein Bereich der Bearbeitungseinrichtung, insbesondere ein Werkzeug, in einen offenen oder geschlossenen Kühlmittelkreislauf eingebunden ist. Der Kühlmittelkreislauf umfasst einen Vorlauf und eine Rücklauf, regelmäßig definiert durch entsprechende Kühlmittelleitungen.

Aus der Praxis sind solche Vorrichtungen hinlänglich bekannt. Diese Vorrichtungen sind insbesondere dann in Bezug auf die Handhabung des Kühlmittels problematisch, wenn es darum geht, das im Kühlmittelkreislauf befindliche Werkzeug (es bildet einen Teil des Kühlmittelkreislaufs) zu Wartungs- oder Reparaturzwecken auszutauschen. Gleiches gilt bei Störungen oder bei Werkzeugverlust, beispielsweise hervorgerufen durch Kappenabriss oder durch einen geplatzten Schlauch. Der Kühlmittelkreislauf steht unter zumindest geringem Druck, so dass beim Entfernen des Werkzeugs Kühlmittel in die Umgebung tritt. Bei belastetem Kühlmittel besteht die Gefahr der Kontamination der Umgebung. Bedienpersonen sind regelmäßig den Belastungen durch das Kühlmittel ausgesetzt, beispielsweise bei Keimbelastung des Kühlmittels.

Aus der Praxis ist es bereits bekannt, vor dem Werkzeugwechsel die die Zirkulation des Kühlmittels bedingende Pumpe auszuschalten. Dies reicht jedoch nicht aus, um den Austritt von Kühlmittel an den Verbindungsstellen zu unterbinden. Hinzu kommt die Problematik langer bzw. sehr langer elastischer Kühlmittelleitungen, die aufgrund des Kühlmitteldrucks zumindest geringfügig ausgedehnt sind. Beim Öffnen der Verbindungsstellen zum Werkzeug hin schrumpft die Leistung und es gelangt unwillkürlich Kühlmittel in die Umgebung. Eine Vorrichtung mit den Merkmalen des Anspruchs 1 ist aus der WO-A-2010 05368 bekannt.

Der vorliegenden Erfindung liegt daher die Aufgabe zugrunde, die zuvor genannten Probleme zumindest weitestgehend zu eliminieren. Es soll mit einfachen Mitteln wirksam verhindert werden, dass Kühlmittel nach außen tritt. Dabei soll es nicht auf das Geschickt der Bedienperson ankommen, vielmehr soll sichergestellt sein, dass ungeachtet der jeweiligen Handhabung der Austritt von Kühlmittel aus dem Kühlmittelkreislauf wirksam vermieden ist.

Voranstehende Aufgabe ist in Bezug auf die Vorrichtung durch die Merkmale des Anspruchs 1 gelöst. Danach ist zunächst wesentlich, dass der Kühlmittelkreislauf eine Fördereinrichtung zum Fördern des Kühlmittels umfasst. Wird diese Fördereinrichtung, regelmäßig eine Pumpe, eine Zylinder-Kolben-Anordnung, etc., deaktiviert, wird aus der Kühlmittelquelle kein weiteres Kühlmittel nachgefördert. Der in der Kühlmittelleitung herrschende Innendruck wäre jedoch ausreichend, beim Öffnen des Kühlmittelkreislaufs eine Kontamination der Umgebung mit Kühlmittel zu verursachen. Folglich reicht das Deaktivieren der Fördereinrichtung oder das Schließen der Leitungen nicht aus.

In weiter erfindungsgemäßer Weise ist eine besondere Steuereinrichtung vorgesehen, die nämlich einerseits zum Deaktivieren der Fördereinrichtung dient und andererseits ein gewisses Leersaugen von Vorlauf- und/oder Rücklauf des Kühlmittelkreislaufs verursacht. Dies erfolgt derart, dass im Kühlmittelkreislauf, insbesondere im Bereich des zu kühlenden Werkzeugs, ein zumindest geringfügiger Unterdruck herrscht, nämlich in der Vorlaufleitung und/oder in der Rücklaufleitung. Dieser Unterdruck bewirkt, dass beim Öffnen des Kühlmittelkreislaufs kein Kühlmittel oder allenfalls geringste Mengen an Kühlmittel nach außerhalb des Kühlmittelkreislaufs gelangen.

In erfindungsgemäßer Weise werden durch die Steuereinrichtung zwei unterschiedliche Maßnahmen vorgenommen, nämlich zum Einen ein Deaktivieren der Fördereinrichtung und zum Anderen ein Erzeugen von Unterdruck in der Vorlaufleitung und/oder in der Rücklaufleitung.

An dieser Stelle sei angemerkt, dass der Begriff "Fördereinrichtung" im weitesten Sinne zu verstehen ist. Ebenso ist es denkbar, dass der Kühlmittelkreislauf an ein häusliches Wassernetz angeschlossen wird, so dass eine besondere Fördereinrichtung nicht erforderlich ist. Als weitere Kühlmittelquelle kommt eine stationäre oder mobile Kühlwasserversorgung mit Tank, Pumpe und Rückkühler in Frage, nämlich zur Einzelversorgung. Anstelle des Abschaltens einer Fördereinrichtung lassen sich im Vorlauf und/oder im Rücklauf Absperrventile schließen, so dass aus der Quelle des Kühlmittels kein weiterer Druck mehr aufgebaut werden kann. Der im Kühlmittelkreislauf erzeugte Unterdruck vermeidet wirksam, dass Kühlmittel beim Entfernen des Werkzeugs und bei entferntem Werkzeug nach außen dringt.

Die Sperreinrichtung kann manuell bzw. mechanisch, elektrisch oder pneumatisch aktiviert werden, je nach Bedarf. Dies bedeutet, dass bei Wartung, Störung, insbesondere bei einem Defekt am Werkzeug, beispielsweise an der Kappe eines Roboter-Schweißgeräts (Kappenabriss) oder bei defektem Schlauch (Schlauchplatzer), die Bedienperson eine Aktivierung der Steuereinrichtung vornimmt. Im Rahmen einer ganz besonders vorteilhaften Ausgestaltung könnte der Defekt am Werkzeug automatisch erkannt werden und könnte die Aktivierung der Steuereinrichtung entsprechend ebenfalls automatisch erfolgen, wobei es von weiterem Vorteil ist, parallel ein Signal - optisch und/oder akustisch und/oder elektrisch/elektronisch - auszugeben.

Entsprechend den voranstehenden Ausführungen umfasst die Steuereinrichtung Mittel bzw. Mechanismen, die auf den Kühlmittelvorlauf und den Kühlmittelrücklauf unmittelbar oder mittelbar wirken. Im Konkreten umfasst die Sperreinrichtung ein mit Druckluft versorgtes Hauptventil, wobei es sich dabei beispielsweise um ein 3/2-Wegeventil oder ein 4/2-Wegeventil oder ein 5/2-Wegeventil handeln kann. Es kann sich dabei im Konkreten um ein Einzelventil oder um die Kombination von Ventilen im Sinne einer Ventilinsel handeln.

Jedenfalls ist das Hauptventil mit Druckluft versorgt, wobei das Hauptventil auf eine Betätigung hin, vorzugsweise per Druckluft (auch mechanisch per Hand oder elektrisch) den Vorlauf und/oder den Rücklauf jeweils über ein Absperrventil schließt.

Wenn die Absperrventile im Vorlauf und/oder Rücklauf geschlossen sind, das heißt wenn eine Kühlmittelzirkulation im Kühlmittelkreislauf unterbunden ist, wird über eine Signal des Hauptventils ein weiteres Ventil oder ein vorzugsweise im Rücklauf ausgebildeter Bypass geöffnet, über den sich die Rücklaufleitung und ggf. die Vorlaufleitung in den Rücklauf hin zur Senke entleert. Es sei angemerkt, dass eine dort vorgesehene Pumpe durchströmt sein kann. Im Rahmen einer solchen Ausgestaltung ist kein Bypass erforderlich, vielmehr lediglich ein Ventil, welches das Rückfließen des Kühlmediums im Rücklauf verhindert. Bei dem Ventil kann es sich um ein Rückschlagventil handeln.

Über das Signal des Hauptventils wird eine Pumpe aktiviert, die die Rücklaufleitung und ggf. die Vorlaufleitung abpumpt, dergestalt, dass im Kühlmittelkreislauf, das heißt in der Vorlaufleitung und in der Rücklaufleitung, ein zumindest geringer Unterdruck entsteht. Dieser Unterdruck kann detektiert bzw. überprüft und ggf. analog oder digital angezeigt werden, damit die Bedienperson eine visuelle Kontrolle hat.

Das Öffnen und das Schließen des Bypass und die Aktivierung/Deaktivierung der Pumpe kann zeitverzögert erfolgen, vorzugsweise über ein fest eingestelltes oder einstellbares Verzögerungsventil bzw. eine entsprechende Ventileinrichtung, wobei eine entsprechende Verzögerungseinheit eine Drosseleinrichtung, ein Rückschlagventil, einen Speichermechanismus und ein beispielsweise druck-/federbelastetes Mehrwegeventil umfassen kann.

Das zuvor bereits erörterte Hauptventil oder ein weiteres Ventil steuert vorzugsweise pneumatisch eine Signalventileinrichtung an, wobei die Signalventileinrichtung die Drücke zweier oder mehrerer Fluide miteinander vergleicht, wobei eines der Fluide das Kühlmittel und der zu delektierende Druck entsprechend der Kühlmitteldruck im Vorlauf und/oder im Rücklauf ist. So wird durch die Signalventileinrichtung insbesondere der Wasserdruck im Vorlauf mit dem vom Hauptventil kommenden Luftdruck verglichen. Bei Unterschreiten/Überschreiten eines Grenzwerts wird per konstantem Fluiddruck, insbesondere per konstantem Luftdruck, die Pumpe zum Erzeugen eines zumindest geringfügigen Unterdrucks im Kühlmittelkreislauf und das Bypassventil angesteuert, so dass vor dem Entfernen des Werkzeugs der zur Vermeidung eines Austretens von Kühlmittel erforderliche Unterdruck eingestellt wird.

Die Signalventileinrichtung kann auch den Fluiddruck in den Leitungen durch eine Messzelle vergleichen und ein elektrisches/pneumatisches Signal weiterschalten.

Nach dem Werkzeugwechsel, das heißt nach dem Schließen des Kühlmittelkreislaufs, ist der übliche Betriebszustand per Reset einstellbar, nämlich manuell bzw. mechanisch, elektrisch oder hydraulisch.

Die gesamte Vorrichtung nebst den Anschlüssen, Druckluft und ggf. Strom, lässt sich in einem Montagerahmen auf kleinstem Raum unterbringen und entsprechend handhaben. Dies ist von weiterem Vorteil.

In Bezug auf die erfindungsgemäße Steuerung ist die zugrundeliegende Aufgabe durch die Merkmale des nebengeordneten Anspruchs 10 gelöst. Dabei ist wesentlich, dass die Steuerung die stromspezifischen Merkmalen der zuvor erörterten Vorrichtung umfasst. Dabei geht es in erster Linie um die Steuerungseinrichtung zum Deaktivieren der Förderungseinrichtung und zum Leersaugen von Vorlauf und/oder Rücklauf, so dass im Bereich des zu kühlenden Werkzeugs ein zumindest geringfügiger Unterdruck in der Vorlaufleitung und/oder in der Rücklaufleitung herrscht, so dass beim Lösen des Werkzeugs ein unbeabsichtigtes Austreten des Kühlmittels vermieden ist.

Die erfindungsgemäße Steuerung umfasst das zuvor erörterte Hauptventil, das Signalventil und das Verzögerungsventil, wobei dort hydraulische und pneumatische Bauteile enthalten sind, um den beanspruchten Anforderungen gerecht zu werden.

Das erfindungsgemäße Verfahren löst die zugrundeliegende Aufgabe durch den weiter nebengeordneten Anspruch 11, wobei das Verfahren zur Anwendung bei der erfindungsgemäßen Vorrichtung zur Kühlmittelversorgung dient. Die Verfahrensschritte lassen sich mit einer ganz besonderen Steuerungseinrichtung realisieren, die das Hauptventil, das Signalventil und das Verzögerungsventil umfasst. Die Steuerung wirkt zwischen der Versorgung mit Kühlmittel und Druckluft, dem Werkzeug und dem ablass-/auslasseitigen Ende der Rücklaufleitung, dahingehend, dass die Versorgung mit Kühlmittel sperrbar und der Kühlmittelkreislauf auf zumindest geringen Unterdruck verbringbar ist.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einem schematischen Diagramm/Schaltbild die grundsätzliche Anordnung einer erfindungsgemäßen Vorrichtung mit entsprechender Steuerrung,
- Fig. 2: in einem schematischen Diagramm/Schaltbild, im Detail, die Steuereinrichtung der erfindungsgemäßen Vorrichtung,
- Fig. 3: in einer schematischen Detailansicht den Aufbau eines erfindungsgemäßen Signalventils, zum Vergleichen unterschiedlicher Drucksignale und
- Fig. 4: in einer schematischen Detailansicht den Aufbau eines Verzögerungsventils, welches fest oder einstellbar ausgeführt sein kann.

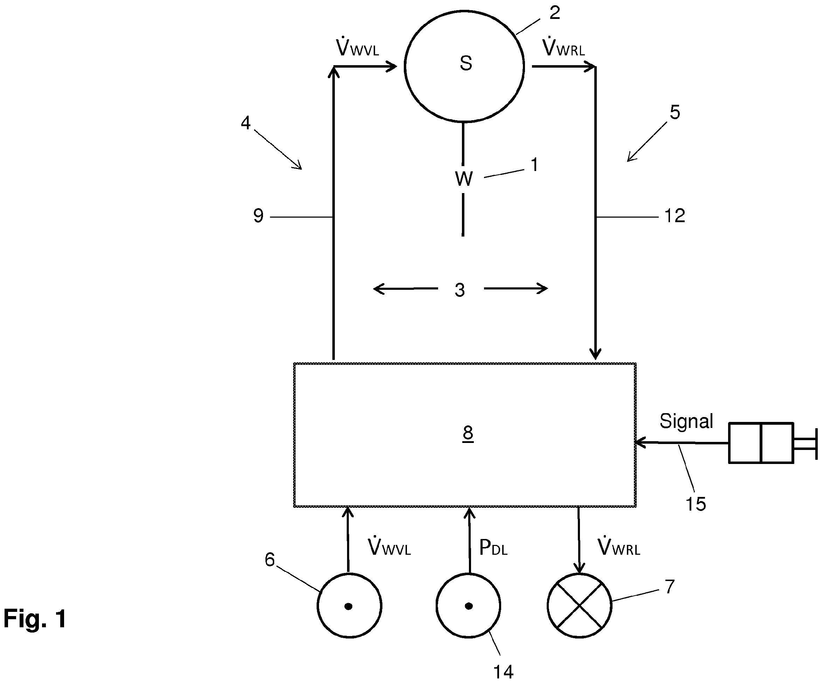

Fig. 1 zeigt in einem schematischen Diagramm, stark vereinfacht die grundsätzliche Funktion eines Ausführungsbeispiels einer erfindungsgemäßen Vorrichtung, die zur Kühlmittelversorgung der lediglich angedeuteten Kappe als Werkzeug 1 einer Schweißeinrichtung 2 dient. Das Werkzeug 1 ist von Kühlmittel bzw. Wasser durchströmt und bildet somit einen Teil des Kühlmittelkreislaufs 3. Der Kühlmittelkreislauf 3 umfasst einen Vorlauf 4 und einen Rücklauf 5. Das Werkzeug kann auch mehrere Kühlkreisläufe haben, die sich nach der Absaugvorrichtung aufteilen, z. B. die Versorgung für einen Trafo. So können verschiedene Kreislaufarme als separate Vor- und Rücklaufleitungen vorgesehen sein, die sich nach dem Werkzeug wieder verbinden.

Das Kühlmittel stammt aus einer Kühlmittelquelle 6, strömt über den Vorlauf 4 durch das Werkzeug 1 und über den Rücklauf 5 in eine Kühlmittelsenke 7. Die Kühlmittelquelle 6 und die Kühlmittelsenke 7 können unter Zwischenschaltung einer Filtereinrichtung vereint sein. Ebenso ist es denkbar, dass das Kühlmittel als Wasser aus einem Fluss entnommen und dorthin wieder zurückgeführt wird. Ebenso ist es denkbar, als Kühlmittelquelle einen Wasseranschluss bzw. eine Wasserversorgungsleitung zu nutzen und als Senke das Abwassernetz. Wie bereits im allgemeinen Teil der Beschreibung angemerkt, kann als weitere Kühlmittelquelle eine stationäre bzw. mobile Kühlwasserversorgung mit Pumpe, Tank und Rückkühler vorgesehen sein, die als Einzelversorgung nutzbar ist.

In Fig. 1 ist des Weiteren angedeutet, dass in erfindungsgemäßer Weise eine Steuereinrichtung 8 vorgesehen ist, die zum Deaktivieren der in Fig. 1 nicht gezeigten Fördereinrichtung bzw. zum Sperren von Vorlauf 4 und Rücklauf 5 dient.

Die Steuereinrichtung 8 dient des Weiteren zum Leersaugen von Vorlauf 4 und/oder Rücklaufs, derart, dass im Bereich des zu kühlenden Werkzeugs 1 ein zumindest geringfügiger Unterdruck in der Vorlaufleitung 9 und/oder in der Rücklaufleitung 12 herrscht. Dieser Unterdruck sorgt dafür, dass beim Entfernen des Werkzeugs 1 das Kühlmittel im Kühlmittelkreislauf 3 verbleibt, jedenfalls nicht nach außerhalb des Kühlmittelkreislaufs 3 gelangt. Eine Kontamination der Umgebung und der Bedienperson ist dadurch wirksam vermieden.

In Fig. 1 ist des Weiteren angedeutet, dass die Steuereinrichtung 8 über ein Signal aktiviert wird, nämlich dann, wenn der Wechsel des Werkzeugs 1 ansteht bzw. vollzogen werden soll, nämlich aufgrund eines Defekts, einer Störung, einer Wartung, etc.. Dieses Signal kann manuell bzw. mechanisch, elektrisch oder pneumatisch ausgelöst werden.

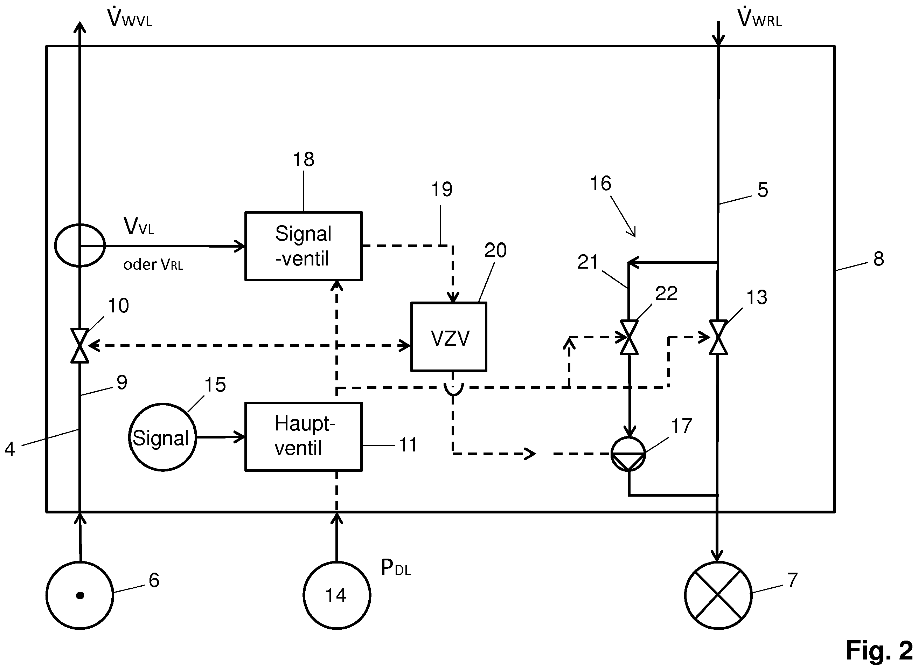

Fig. 2 zeigt in einem schematischen Diagramm die Steuereinrichtung 8, die entsprechend den voranstehenden Ausführungen zu Fig. 1 auf den Vorlauf 4, den Rücklauf 5 und auf ein Absaugen des Kühlmittelkreislaufs 3 wirkt.

Fig. 2 zeigt, dass im Vorlauf 4 bzw. in der Vorlaufleitung 9 ein Absperrventil 10 vorgesehen ist, welches über ein Hauptventil 11 bzw. eine Hauptventileinrichtung aktivierbar ist. Des Weiteren ist im Rücklauf 5 bzw. in der Rücklaufleitung 12 ebenfalls ein Absperrventil 13 vorgesehen, ebenfalls aktivierbar über das Hauptventil 11.

Das Hauptventil 11 wird von außerhalb der Steuereinrichtung 8 mit Druckluft versorgt, nämlich aus einer Druckluftquelle 14.

Das Hauptventil 11 wird über ein Signal 15 geschaltet, wodurch die Wasserversorgung über die Absperrventile 10, 13 geschlossen wird. Dazu können beispielsweise 2- oder 3-Wege-Kugelhahnventile vorgesehen sein.

Gleichzeitig oder kurz danach wird ein Bypass 16 geöffnet und wird eine Pumpe 17 aktiviert, wobei das Signal über das Hauptventil 11 generiert wird. Das Druckluftsignal (Versorgung) wird vom Hauptventil über das Verzögerungsventil bzw. Wegeventil zur Pumpe 17 gefördert. Es sei angemerkt, dass das Signal nicht zwingend vom Hauptventil kommen muss. Vielmehr kann auch ein weiteres Ventil vorgesehen sein, z. B. unter Nutzung einer Ventilinsel.

Wenn der Bypass 16 geöffnet und die Pumpe 17 aktiviert sind, wird vorzugsweise im Vorlauf 4 der Druck bzw. Druckabfall gemessen.

Bei dem hier gewählten Ausführungsbeispiel findet in einer Signalventilanordnung 18 ein Druckvergleich statt, hier ein Druckvergleich zwischen dem Druck im Vorlauf 4 und einem Luftdruck. Entsprechend umfasst die Signalventilanordnung 18 als integralen Bestandteil eine Art Druckwage, die Drücke unterschiedlicher oder aber auch gleicher Strömungsmedien miteinander vergleichen kann.

Im hier erörterten Beispiel wird der fallende Wasserdruck im Vorlauf 4 verglichen mit einem konstanten Luftdruck. Die Signalventilanordnung 18 gibt als Signal bzw. Stellgröße einen Luftdruck 19 weiter, sobald der detektierte Wasserdruck einen vorgebbaren Grenzwert unterschreitet. Dabei gilt es zu berücksichtigen, dass sich der Vorlauf 4 im Falle der Verwendung einer Schlauchleitung zumindest geringfügig zusammenzieht. Der Grenzwert kann sowohl bei negativem als auch bei positivem Druck in der Kühlwasserleitung definiert werden. Das Schaltsignal hat bei einem negativen Druck den Vorteil, dass das Zeitverzögerungsventil als normales Wegeventil ausgeführt sein kann.

Der Luftdruck 19 bzw. das entsprechende Signal wird als konstantes Luftsignal weitergegeben und zwar an ein Verzögerungsventil 20. Dieses Verzögerungsventil 20 kann mit einer zur Verzögerung dienenden Zeitkonstante ausgestattet sein. Auch ist es denkbar, die Verzögerung variabel einzustellen. Anstelle des Verzögerungsventils kann auch ein Wegeventil vorgesehen sein.

Unter Berücksichtigung der durch das Verzögerungsventil 20 hervorgerufenen Verzögerung wird die Pumpe 17, nach einem gewissen Nachlauf, abgeschaltet. Dazu wird die Luftversorgung der Pumpe 17 unterbrochen. Zu diesem Zeitpunkt ist im Kühlmittelkreislauf 3 ein gewisser Unterdruck erreicht, dessen Erreichen optisch und/oder akustisch und/oder elektrisch/elektronisch angezeigt werden kann.

Die angestrebte Operation, nämlich der Wechsel des Werkzeugs und dessen Herausnahme aus dem Kühlmittelkreislauf 3, kann nun erfolgen.

Der zuvor bereits angesprochene Bypass 16 umfasst eine Bypassleitung 21 und ein Absperrventil 22. Wenn das Absperrventil 22 geöffnet ist, lässt sich über die Pumpe 17 Kühlmittel aus dem Rücklauf 5 und somit auch indirekt, aus dem Vorlauf 4 absaugen, nämlich in die Kühlmittelsenke 7. Das Absperrventil 13 im Rücklauf ist dabei geschlossen. Wie im allgemeinen Teil der Beschreibung angemerkt, kann die Pumpe auch durchströmt sein. In diesem Fall ist kein Bypass erforderlich, vielmehr nur ein Ventil, welches das Rückfließen des Kühlmediums im Rücklauf verhindert. Hier lässt sich ein Rückschlagventil nutzen.

Nach dem Werkzeugwechsel, nämlich dann, wenn das Werkzeug 1 wieder an den Kühlmittelkreislauf 3 bzw. den Vorlauf 4 und den Rücklauf 5 angeschlossen ist, kann die Steuereinrichtung 8 resettet werden, so dass der Bearbeitungsbetrieb wieder beginnen kann. Der Reset kann manuell, elektrisch oder pneumatisch erfolgen.

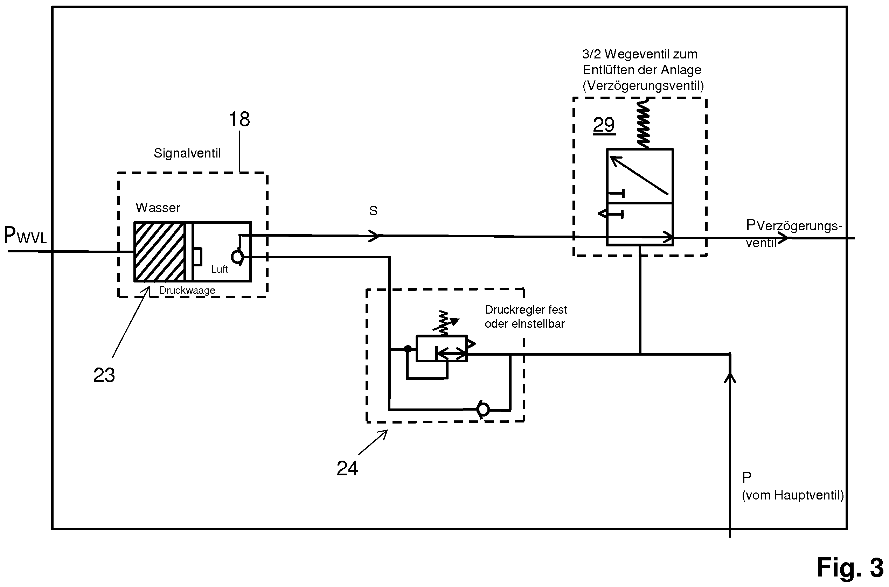

Fig. 3 zeigt in einem schematischen Schaltbild, im Detail, ein Ausführungsbeispiel eines Signalventils 18, welches zum Vergleich der Signale unterschiedlicher Medien im Sinne einer Wasser-/Druckwaage dient. Eine entsprechende Anordnung 23 ist vorgesehen. Zur Vermeidung von Wiederholungen sei auf die allgemeine Beschreibung und die Beschreibung von Fig. 2 verwiesen.

Des Weiteren ist ein Druckregler 24 vorgesehen, der fest eingestellt ist. Auch ist es denkbar, eine freie Einstellbarkeit des Druckreglers 24 vorzusehen.

Fig. 3 zeigt des Weiteren ein 3/2-Wegeventil 29 zum Entlüften. Von dort aus wird das Signal zum eigentlichen Verzögerungsventil 20 geleitet.

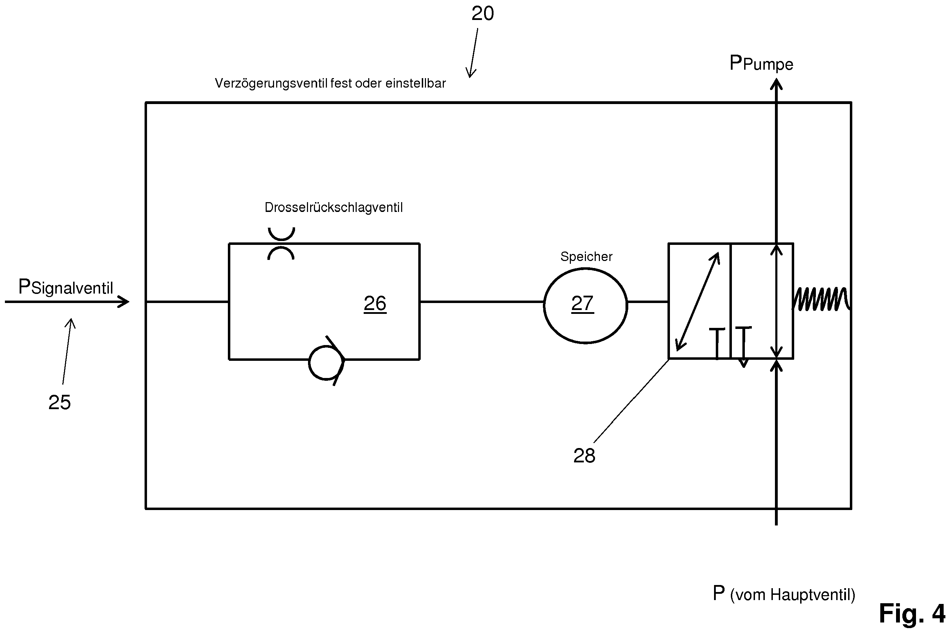

Fig. 4 zeigt in schematischer Ansicht das Verzögerungsventil 20, als Bestandteil der Steuereinrichtung 8. Das Verzögerungsventil 20 wird von der Signalventilanordnung 18 her mit einem Signalventildruck 25 beaufschlagt. Es kann pneumatische Bauteile zur Herbeiführung der gewünschten Verzögerung enthalten, beispielsweise eine Drossel mit Rückschlagventil 26, einen Speicher, ein zeitverzögertes Wegeventil 28, etc.. Wesentlich ist für das Verzögerungsventil 20, dass dort eine vorgegebene Verzögerung implementiert ist. Alternativ könnte die Verzögerung in Bezug auf das Ausgangssignal, das heißt das zur Pumpe 17 führende Signal, veränderbar bzw. einstellbar sein. Ein Grenzwert kann bei negativem Druck in der Kühlwasserleitung schalten. Das Schaltsignal hat bei negativem Druck den Vorteil, dass das Zeitverzögerungsventil als normales Wegeventil ausgeführt sein kann.

Weiter sein angemerkt, dass die Steuerung auch auf andere Art und Weise aufgebaut sein kann. Dazu kann in einer ganz besonders einfachen Ausgestaltung lediglich ein Signalventil und eine vereinfachte Pumpe in Form eines Absaugzylinders im Rücklauf erforderlich sein. Ein Bypass wird im Rahmen einer solchen Ausgestaltung nicht benötigt. Der Kühlwasservorlauf wird durch ein Absperrventil geschlossen, wobei das Signalventil den Vor- und Rücklaufdruck vergleicht. Es wird ein pneumatisches Signal an den Absaugzylinder und an das Absperrventil im Kühlwasserrücklauf geschaltet, wenn sich der Rücklaufdruck und Vorlaufdruck aneinander angeglichen haben. Dabei ist es lediglich erforderlich, dass sich die beiden Drücke einander nähern und nicht etwa identisch sind.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf das Ausführungsbeispiel einschränkt.

### Bezugszeichenliste

- 1: Werkzeug
- 2: Schweißeinrichtung
- 3: Kühlmittelkreislauf
- 4: Vorlauf (des Kühlmittelkreislaufs)
- 5: Rücklauf (des Kühlmittelkreislaufs)
- 6: Kühlmittelquelle
- 7: Kühlmittelsenke
- 8: Steuereinrichtung
- 9: Vorlaufleitung
- 10: Absperrventil (Vorlauf)
- 11: Hauptventil
- 12: Rücklaufleitung
- 13: Absperrventil (Rücklauf)
- 14: Druckluftquelle
- 15: Signal
- 16: Bypass
- 17: Pumpe
- 18: Signalventilanordnung, Signalventil
- 19: Luftdruck
- 20: Verzögerungsventil
- 21: Bypassleitung
- 22: Absperrventil (Bypass)
- 23: Anordnung, Druckwaage
- 24: Druckregler
- 25: Signalventildruck
- 26: Drossel/Rückschlagventil
- 27: Speicher
- 28: Wegeventil
- 29: Entlüftungsventil

## Patentansprüche

1. Vorrichtung zur Kühlmittelversorgung einer mit fluidem Kühlmittel, insbesondere mit Wasser, zu versorgenden Bearbeitungseinrichtung, beispielsweise einer Schweißeinrichtung (2), eines Schweißroboters, etc., wobei der zu kühlende Bereich oder das zu kühlende Werkzeug, beispielsweise eine Schweißkappe, in einen offenen oder geschlossenen Kühlmittelkreislauf mit Vorlauf (4) und Rücklauf (5) eingebunden ist, mit
einer im Kühlmittelkreislauf arbeitenden Fördereinrichtung zum Fördern des Kühlmittels im Kühlmittelkreislauf und
einer Steuereinrichtung (8) zum Deaktivieren der Fördereinrichtung und/oder Schließen von Vorlauf (4) und/oder Rücklauf (5),
**dadurch gekennzeichnet, dass** die Steuereinrichtung (8) außerdem zum Leersaugen von Vorlauf (4) und/oder Rücklauf (5) dient, derart, dass im Bereich des zu kühlenden Werkzeugs ein zumindest geringfügiger Unterdruck in der Vorlaufleitung (9) und/oder in der Rücklaufleitung (12) herrscht, wobei über ein Signal eines Hauptventils (11) ein Bypass (16) geöffnet wird, über den sich die Rücklaufleitung (12) und ggf. die Vorlaufleitung (9) in den Rücklauf (5) entleert oder wobei im Rücklauf (5) ohne Vorkehrung eines Bypasses eine fluiddurchströmte Pumpe sowie ein Rückschlagventil vorgesehen sind, und wobei das Ventil das Rückfließen des Kühlmediums im Rücklauf (5) verhindert.

2. Vorrichtung nach Anspruch 1, **dadurch gekennzeichnet, dass** die Steuereinrichtung mechanisch, elektrisch oder pneumatisch aktivierbar ist.

3. Vorrichtung nach Anspruch 1 oder 2, **dadurch gekennzeichnet, dass** die Steuereinrichtung ein mit Druckluft versorgtes Hauptventil umfasst, welches auf eine Betätigung hin, vorzugsweise per Druckluft oder mechanisch per Hand oder elektrisch, den Vorlauf/Rücklauf schließt.

4. Vorrichtung nach einem der Ansprüche 1 bis 3, **dadurch gekennzeichnet, dass** über das Signal des Hauptventils eine Pumpe aktiviert wird, die die Rücklaufleitung und ggf. die Vorlaufleitung abpumpt.

5. Vorrichtung nach Anspruch 4, **dadurch gekennzeichnet, dass** das Öffnen und Schließen des Bypass und die Aktivierung/Deaktivierung der Pumpe zeitverzögert erfolgt, vorzugsweise über ein fest eingestelltes oder einstellbares Verzögerungsventil.

6. Vorrichtung nach einem der Ansprüche 1 bis 5, **dadurch gekennzeichnet, dass** das Hauptventil eine Signalventileinrichtung ansteuert, die die Drücke zweier oder mehrerer Fluide miteinander vergleicht, insbesondere den Wasserdruck im Vorlauf mit dem Luftdruck vom Hauptventil, und bei Unterschreiten/Überschreiten eines Grenzwertes des Wasserdrucks per konstantem Fluiddruck, insbesondere per Luftdruck, und/oder elektrisch die Pumpe und das Bypassventil ansteuert.

7. Vorrichtung nach einem der Ansprüche 1 bis 6, **dadurch gekennzeichnet, dass** nach dem Werkzeugwechsel, d.h. nach dem Schließen des Kühlmittelkreislaufs, manuell bzw. mechanisch, elektrisch oder hydraulisch der übliche Betriebszustand per Reset einstellbar ist.

8. Vorrichtung nach einem der Ansprüche 1 bis 7, **dadurch gekennzeichnet, dass** die gesamte Vorrichtung nebst Anschlüsse für Wasser, Druckluft und ggf. Strom in einem Montagerahmen angeordnet ist.

## Claims

1. Device for supplying coolant to a processing device which is intended to be supplied with a fluid coolant, in
particular with water, for example, a welding device (2), a welding robot, etc., wherein the region which is intended to be cooled or the tool which is intended to be cooled, for example, a welding cap, is incorporated in an open or closed coolant circuit with a feed line (4) and a return line (5), having
a conveying device which operates in the coolant circuit for conveying the coolant in the coolant circuit, and
a control device (8) for deactivating the conveying device and/or closing the feed line (4) and/or return line (5), **characterised in that** the control device (8) further serves to drain the feed line (4) and/or return line (5) in such a manner that, in the region of the tool which is intended to be cooled, there is an at least slight reduced pressure in the feed line (9) and/or in the return line (12), wherein there is opened via a signal of a main valve (11) a bypass (16) via which the return line (12) and where applicable the feed line (9) is emptied into the return line (5) or wherein in the return line (5) without provision of a bypass a pump through which fluid flows and a non-return valve are provided, and wherein the valve prevents the return flow of the coolant in the return line (5).

2. Device according to claim 1, **characterised in that** the control device can be activated mechanically, electrically or pneumatically.

3. Device according to claim 1 or 2, **characterised in that** the control device comprises a main valve which is supplied with compressed air and which in response to actuation, preferably by means of compressed air, or mechanically by hand or electrically, closes the feed line/return line.

4. Device according to any one of claims 1 to 3, **characterised in that** there is activated via the signal of the main valve a pump which drains the return line and where applicable the feed line.

5. Device according to claim 4, **characterised in that** the opening and closing of the bypass and the activation/deactivation of the pump are carried out in a time-delayed manner, preferably via a fixedly adjusted or an adjustable retarding valve.

6. Device according to any one of claims 1 to 5, **characterised in that** the main valve controls a signal valve device which compares the pressures of two or more fluids with each other, in particular the water pressure in the feed line with the air pressure of the main valve, and, when a value falls below/exceeds a limit value of the water pressure, controls the pump and the bypass valve via constant fluid pressure, in particular via air pressure, and/or electrically.

7. Device according to any one of claims 1 to 6, **characterised in that** after the tool change, that is to say, after the coolant circuit has been closed, the normal operational state can be adjusted manually or mechanically, electrically or hydraulically using Reset.

8. Device according to any one of claims 1 to 7, **characterised in that** the entire device including connections for water, compressed air and where applicable electrical power is arranged in an assembly frame.

## Revendications

1. Dispositif pour l'alimentation en produit de refroidissement d'un dispositif d'usinage à alimenter en produit de refroidissement fluide, plus particulièrement en eau, par exemple d'un dispositif de soudure (2), d'un robot de soudure etc., la zone à refroidir ou l'outil à refroidir, par exemple un capuchon de soudure, étant intégré dans un circuit de produit de refroidissement ouvert ou fermé avec un aller (4) et un retour (5), avec
un dispositif de convoyage fonctionnant dans le circuit de produit de refroidissement pour le convoyage du produit de refroidissement dans le circuit de produit de refroidissement et
un dispositif de commande (8) pour la désactivation du dispositif de convoyage et/ou la fermeture de l'aller (4) et/ou du retour (5),
**caractérisé en ce que** le dispositif de commande (8) sert en outre à la vidange par aspiration de l'aller (4) et/ou du retour (5), de façon à ce que, au niveau de l'outil à refroidir, règne une dépression au moins faible dans la conduite d'aller (9) et/ou dans la conduite de retour (12), moyennant quoi, par l'intermédiaire d'un signal, une soupape principale (11) ouvre une dérivation (16), par l'intermédiaire de laquelle la conduite de retour (12) et, le cas échéant, la conduite d'aller (9), se vide dans le retour (5) ou, dans le retour (5) sans le recours à une dérivation, une pompe traversée par un fluide ainsi qu'un clapet anti-retour sont prévus et la soupape empêchant le reflux du produit de refroidissement dans le retour (5).

2. Dispositif selon la revendication 1, **caractérisé en ce que** le dispositif de commande est activable mécaniquement, électriquement ou pneumatiquement.

3. Dispositif selon la revendication 1 ou 2, **caractérisé en ce que** le dispositif de commande comprend une soupape principale alimentée en air comprimé qui, lors d'un actionnement, de préférence par de l'air comprimé ou mécaniquement à la main, ou électriquement, ferme l'aller/retour.

4. Dispositif selon l'une des revendications 1 à 3, **caractérisé en ce que**, par l'intermédiaire du signal de la soupape principale, une pompe est activée, qui pompe la conduite de retour et, le cas échéant la conduite d'aller.

5. Dispositif selon la revendication 4, **caractérisé en ce que** l'ouverture et la fermeture de la dérivation et l'activation/désactivation de la pompe ont lieu de manière retardée, de préférence par l'intermédiaire d'une soupape de retard réglée de manière fixe ou ajustable.

6. Dispositif selon l'une des revendications 1 à 5, **caractérisé en ce que** la soupape principale contrôle un dispositif à soupape de signal qui compare entre elles les pressions de deux fluides ou plus, plus particulièrement la pression d'eau dans l'aller avec la pression de l'air de la soupape principale et, lors d'un passage en dessous / dépassement d'une valeur limite de la pression d'eau, contrôle à l'aide d'une pression de fluide, plus particulièrement une pression d'air constante et/ou de manière électrique la pompe et la soupape de dérivation.

7. Dispositif selon l'une des revendications 1 à 6, **caractérisé en ce que**, après le changement d'outil, c'est-à-dire après la fermeture du circuit de produit de refroidissement, l'état de fonctionnement habituel peut être réglé par reset manuellement ou mécaniquement, électriquement ou hydrauliquement.

8. Dispositif selon l'une des revendications 1 à 7, **caractérisé en ce que** l'ensemble du dispositif avec les raccords pour l'eau, l'air comprimé et, le cas échéant, le courant, est disposé dans un châssis de montage.
